# EUROPEAN PATENT APPLICATION

(11) **EP 4 333 145 A1**
(43) Date of publication of application: **06.03.2024**
(21) Application number: 23194332.5
(22) Date of filing: 30.08.2023
(51) Int. Cl.: H01M 10/04, H01M 50/105

(54) **SECONDARY BATTERY MANUFACTURING SYSTEM HAVING A MULTI-PACKAGING UNIT**

(30) Priority: 01.09.2022 KR 20220110846
(71) Applicant: SK On Co., Ltd., Seoul 03161 (KR); Toptec Co., Ltd., Gumi-si Gyeongsangbuk-do 39158 (KR)
(72) Inventor: SHIN, Yong Uk, 17917 Pyeongtaek-si (KR); CHO, Sang Sik, 31487 Asan-si (KR); NAM, Dae Woon, 17867 Pyeongtaek-si (KR); PARK, Dong Jin, 31409 Asan-si (KR); CHOI, Jae Gyun, 31037 Cheonan-si (KR); AN, Chi Hong, 31409 Asan-si (KR)
(74) Representative: Prüfer & Partner mbB Patentanwälte · Rechtsanwälte

(57) **Abstract**

The present disclosure relates to a secondary battery manufacturing system in which a packaging unit of a secondary battery manufacturing facility are configured to have multiple packaging units, and having a multipackaging unit such that a transfer box in which an electrode assembly is seated is transferred to each of the packaging units by a transfer unit, and including an electrode supply unit having a plurality of stacking devices supplying an electrode assembly in which a plurality of battery cells are stacked, a tab welding unit, at least one packaging unit, at least one temporary buffer, and a transfer unit.

## Description

### TECHNICAL FIELD

The present disclosure relates to a secondary battery manufacturing system having a multipackaging unit.

### BACKGROUND

In general, a secondary battery may be a battery that is used repeatedly through a discharging process in which chemical energy is converted into electrical energy and a charging process in which electrical energy is converted into chemical energy.

The secondary battery may include a nickel-cadmium (Ni-Cd) battery, a nickel-hydrogen (Ni-MH) battery, a lithium-metal battery, a lithium-ion (Li-Ion) battery, a lithium-ion (Li-Ion) polymer battery, or the like.

Among secondary batteries, a lithium secondary battery may have a cycle life of about 500 times or more and a short charging time of about 1 hour to about 2 hours, may be about 30% to 40% lighter than a nickel-hydrogen battery, enabling a decrease in weight, may have the highest voltage (30 to 37 V) per unit cell among current secondary batteries, and may have an excellent energy density, to have characteristics optimized for mobile devices.

In such a lithium secondary battery, an electrode assembly in which a plurality of battery cells (jelly roll-type electrodes) are stacked is sealed, together with an electrolyte solution, in a pouch formed of an aluminum encapsulant, to be manufactured as a pouch-type secondary battery.

At this time, electrode tabs of the electrode assembly accommodated in the pouch may be electrically connected to lead tabs drawn out of the pouch, and the lead tabs may be protected by an insulating film.

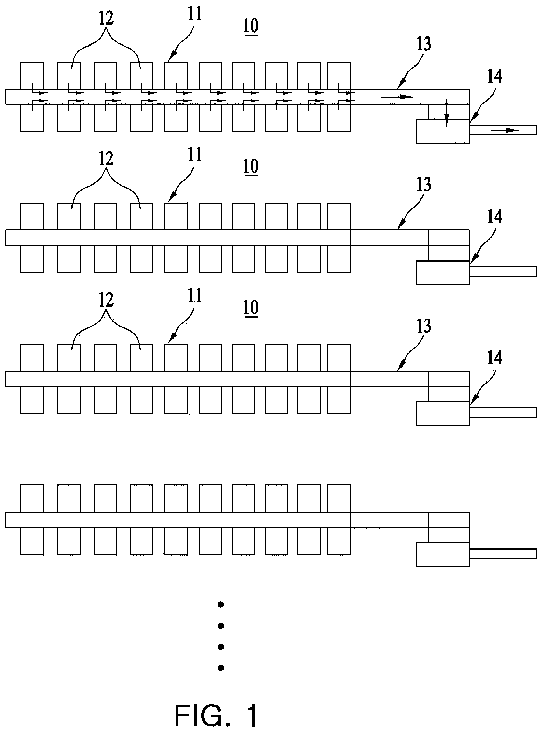

As illustrated in FIG. 1, the above pouch-type secondary batteries may be individually manufactured through a plurality of secondary battery manufacturing facility 10 lines.

The secondary battery manufacturing facility 10 may include an electrode supply unit 11 having a plurality of stacking devices 12 supplying an electrode assembly in which battery cells are stacked, a tab welding unit 13 receiving the electrode assembly, welding a plurality of positive and negative electrodes exposed from the electrode assembly into a bundle thereof, and connecting (+) and (-) electrode tabs to the bundled positive and negative electrodes, respectively, and a packaging unit 14 inserting the welded electrode assembly into an aluminum pouch and injecting an electrolyte solution thereinto.

However, the above secondary battery manufacturing facility may have the following problems because it is an in-line method in which the electrode supply unit, the tab welding unit, and the packaging unit are sequentially arranged and a secondary battery is manufactured by passing through each of the units.

Since component replacement and material supply of the tab welding unit and the packaging unit are usually performed twice a day, an operation of the secondary battery manufacturing facility should also be stopped during the above periods, resulting in a serious decrease in manufacturing productivity of the secondary battery.

Accurately, in the tab welding unit, this may be because cleaning and setting is performed by a worker along with replacement of consumable components for welding electrodes, and in the packaging unit, this may be because supply of consumable components such as an aluminum pouch, an electrolyte, or the like for packaging electrode assemblies is required.

For example, as illustrated in FIG. 1, when components of a tab welding unit of a specified secondary battery manufacturing facility line, among the plurality of secondary battery manufacturing facilities, should be replaced, the electrode assembly may not be welded. Therefore, driving of the electrode supply unit for supplying the electrode assembly and the packaging unit for pouch packaging may be inevitably stopped. In contrary, when material supply of the packaging unit is performed, pouch packaging of the electrode assembly may not be performed. Therefore, the corresponding secondary battery manufacturing facility line has to be stopped.

Since a time period during which the secondary battery manufacturing facility is stopped due to the above requirements may be usually about 1.5 to 2 hours, there may be a problem that the secondary battery may not be manufactured during the same time period.

### [Prior Art Document]

[Patent Document 1] Korean Patent No. 10-2022-0084517
[Patent Document 2] Korean Patent No. 10-1933550

### SUMMARY

An aspect of the present disclosure was made to solve the above problems and technical prejudices, and by applying a multi-line method, rather than an in-line method, to a secondary battery manufacturing facility, to provide a secondary battery manufacturing system having a multipackaging unit such that discharge or supply of an electrode assembly, even when a tab welding unit or a packaging unit is stopped, is continuously performed.

In some embodiments of the present disclosure, a secondary battery manufacturing system having a multipackaging unit, includes an electrode supply unit having a plurality of stacking devices supplying an electrode assembly in which a plurality of battery cells are stacked; a tab welding unit disposed adjacent to the electrode supply unit, welding an electrode tab exposed from the electrode assembly into a bundle thereof, and connecting electrode leads to seat the electrode assembly on a transfer box; at least one packaging unit disposed to be spaced apart from the tab welding unit, receiving the transfer box from the tab welding unit, and inserting the electrode assembly into an aluminum pouch; at least one temporary buffer disposed on one side of the tab welding unit and temporarily loading the transfer box in stopping driving of the packaging unit; and a transfer unit disposed between the tab welding unit and the packaging unit, and selectively transferring the transfer box of the tab welding unit or the transfer box of the temporary buffer to a plurality of the packaging unit according to control of a controller.

In this case, the transfer unit may pick up the transfer box loaded in the temporary buffer in stopping driving of the tab welding unit, to supply the transfer box to the packaging unit, and may pick up the transfer box discharged from the tab welding unit in stopping driving of the packaging unit, to load the transfer box into the temporary buffer or supply the transfer box to an unstopped packaging unit.

In this case, the transfer unit may be an automatic guided vehicle (AGV) or an autonomous mobile robot (AMR).

In addition, the plurality of secondary battery manufacturing facilities may be arranged in a parallel direction.

In this case, the transfer unit may be arranged in plural to be interconnected with tab welding units, temporary buffers, and packaging units by wireless control, and may transfer the transfer box of the tab welding unit or the transfer box of the temporary buffer to a selected packaging unit, while circularly moving along a virtual movement path between the tab welding unit and the packaging unit in an arrangement direction of the secondary battery manufacturing facilities, or recover an empty transfer box.

In the transfer box, a plurality of seating plates on which the electrode assembly is seated may be spaced apart in a vertical direction, and a flow prevention unit pressing electrode assemblies seated on the seating plates and preventing flowing of the electrode assemblies may be provided.

In this case, the flow prevention unit may include fixing tables respectively disposed on both sides of the seating plates and supporting the seating plates in a moving manner; a lifting link in which a plurality of pivoting bars rotatably overlapped in an 'X' shape are disposed adjacent to a pair of the fixing tables, and in which one side of each of the pivoting bars is installed on a one side end portion of each of the seating plates through a pivoting pin, and the other side of each of the pivoting bars is installed on the other side end portion of each of the seating plates through a pivoting pin; and a moving block connected to an end portion of the pivoting bar disposed on a lower side in a vertical direction through a pivoting pin, and rotating the pivoting bar to simultaneously lift the seating plates, while moving horizontally by rotation of a rotary shaft, to space the seating plates apart from each other.

Moreover, a guide rail may be disposed such that the seating plate lifts between one side of the pivoting bar and an end portion of the seating plate when the pivoting bar is rotated according to movement of the moving block.

In addition, the flow prevention unit may include a plurality of pressure plates disposed above each of the seating plates on which the electrode assembly is seated, and moving toward the seating plate; a lifting support disposed on both sides of the pressure plate and movably supporting the pressure plates; an elastic member connected to be elastically supported with each other such that the pressure plate and the seating plate are provided to form a pair; and a pushing rod having a predetermined length such that a pair of seating plates are spaced apart from each other by simultaneously moving the pressure plates in a state connected to each of the pressure plates.

According to an aspect of the present disclosures, supply or discharge of the electrode assembly is continuously performed.

### BRIEF DESCRIPTION OF DRAWINGS

Certain aspects, features, and advantages of the disclosed technology may be illustrated by the following detailed description with reference to the accompanying drawings.
FIG. 1 is a schematic diagram illustrating a conventional secondary battery manufacturing system.
FIG. 2 is a schematic diagram illustrating a secondary battery manufacturing system according to the disclosure of this patent document.
FIGS. 3 and 4 are reference views illustrating a movement path of a transfer unit among components of a secondary battery manufacturing system according to the disclosure of this patent document.
FIG. 5 is a perspective view illustrating an embodiment of a flow prevention unit of a transfer box among components of a secondary battery manufacturing system according to the disclosure of this patent document.
FIGS. 6 and 7 are working diagrams illustrating the driving state of FIG. 5.
FIG. 8 is a perspective view illustrating another embodiment of a flow prevention unit of a transfer box among components of a secondary battery manufacturing system according to the disclosure of this patent document.
FIGS. 9 and 10 are working diagrams illustrating the driving state of FIG. 8.

### DETAILED DESCRIPTION

Hereinafter, preferred embodiments of the disclosure will be described in more detail with reference to the accompanying drawings. Embodiments of the present disclosure may be modified in various forms, and the scope of the present disclosure should not be construed as being limited to the embodiments described below. These embodiments may be provided to explain the disclosure in more detail to those skilled in the art to which the disclosure pertains. Accordingly, a shape of each element illustrated on the drawings may be exaggerated to emphasize a clearer explanation.

Terms such as "first, " "second, " or the like may be used to describe various components, but the components should not be limited by the terms. Terms may be only used to distinguish one component from another.

Terms used in this application may be only used to describe specific embodiments, and may not be intended to limit the disclosure of this patent document. Singular expressions include plural expressions unless the context clearly dictates otherwise. In this application, it should be understood that the terms "include," "have," or the like are intended to designate that a feature, numeral, step, operation, component, part, or combination thereof, described in the specification, is present, but the presence or addition of at least one other feature, numeral, step, operation, component, part, or combination thereof is not precluded.

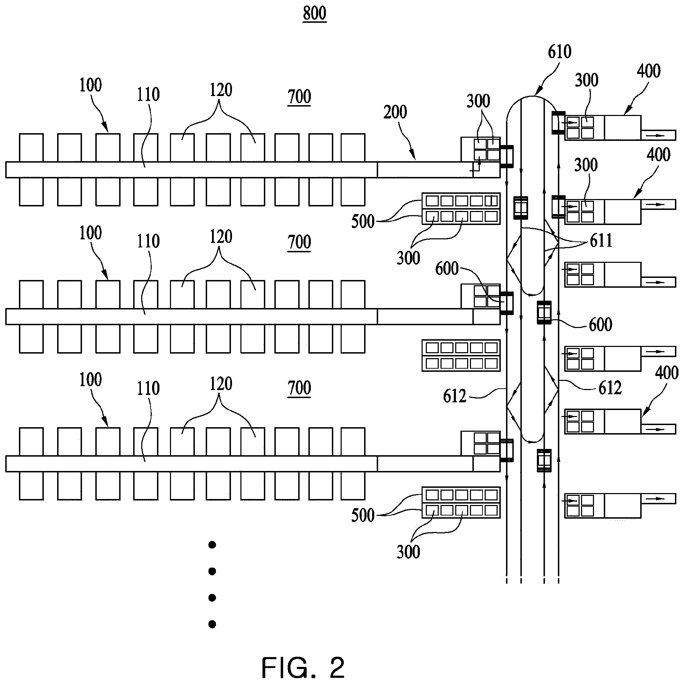

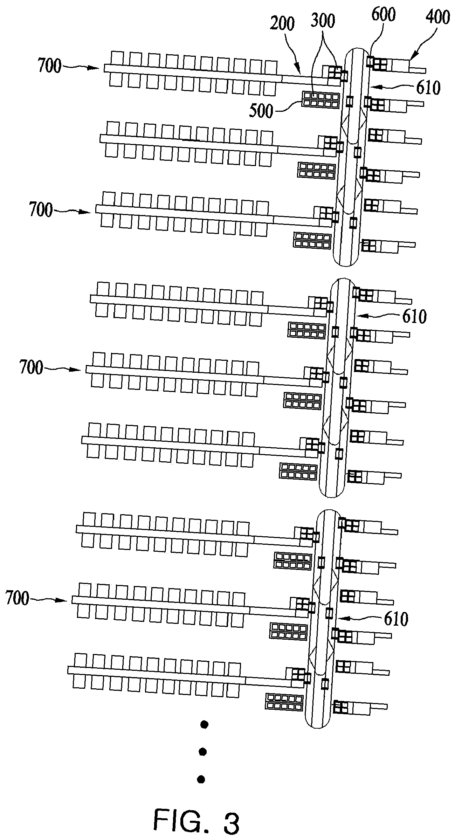

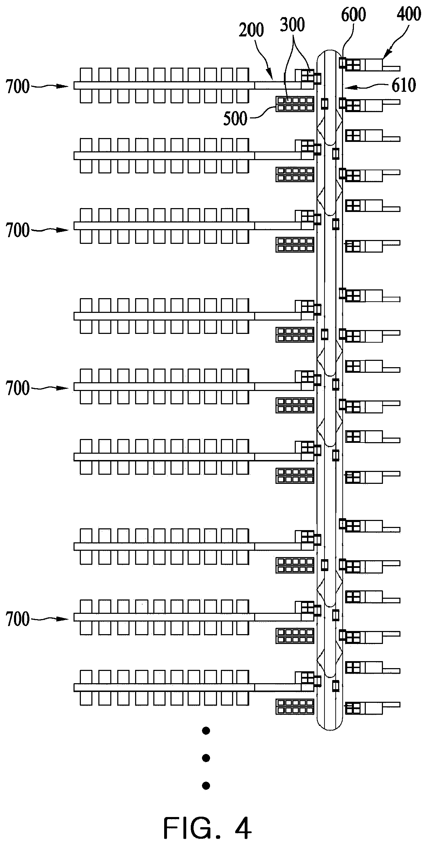

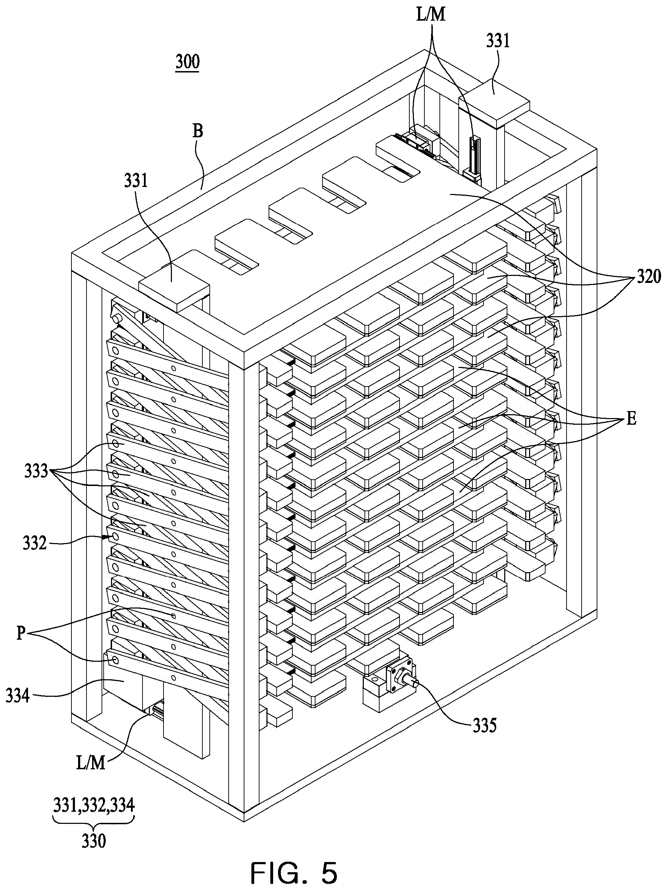

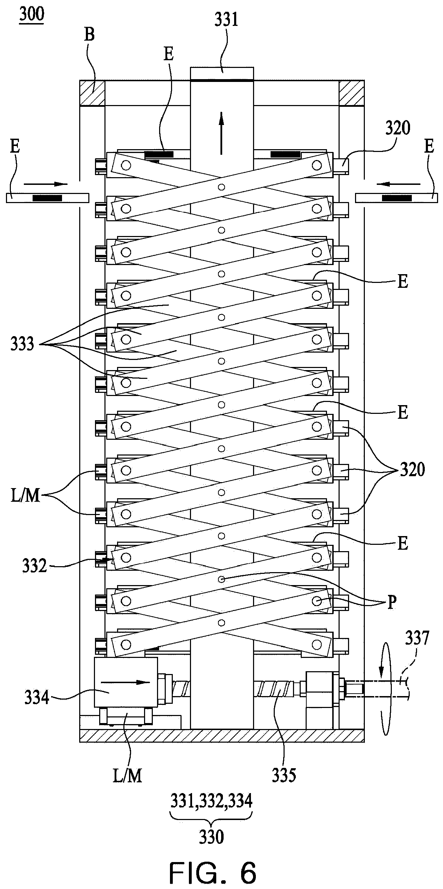

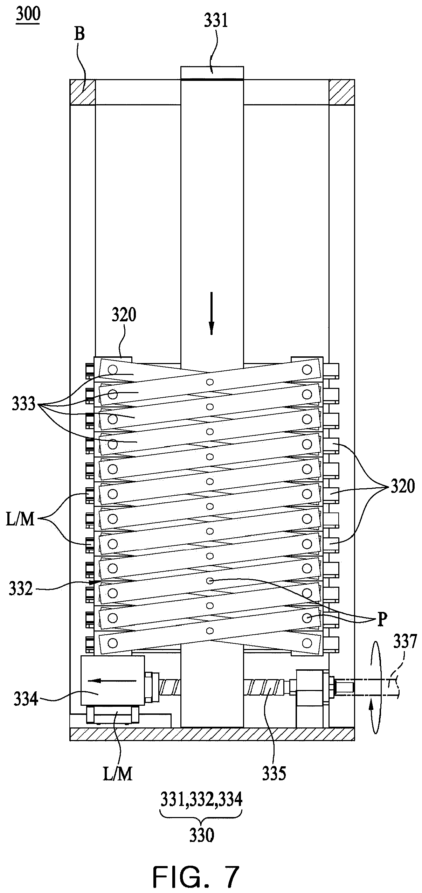

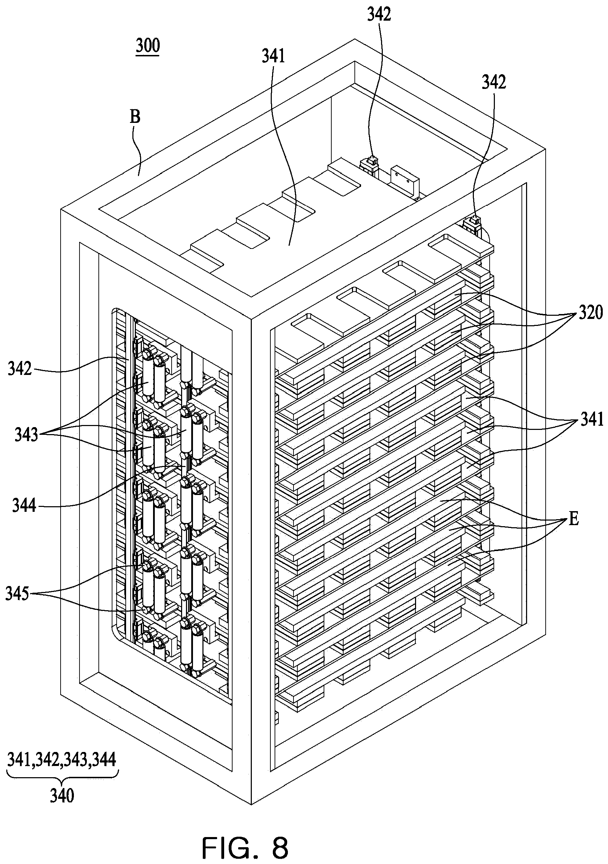

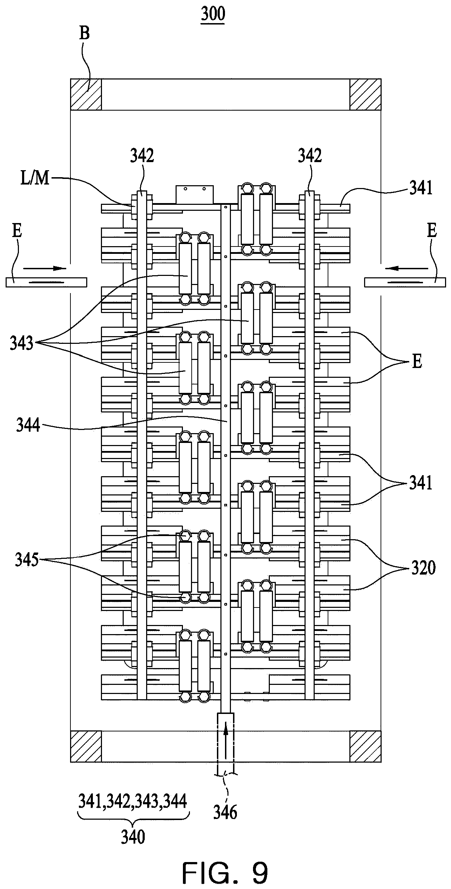

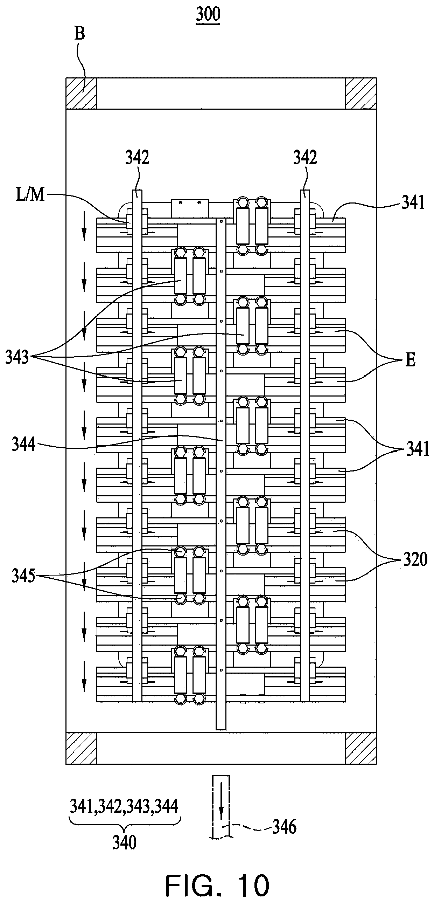

FIG. 2 is a schematic diagram illustrating a secondary battery manufacturing system according to the present disclosure, FIGS. 3 and 4 are reference views illustrating a movement path of a transfer unit among components of a secondary battery manufacturing system according to the disclosure of this patent document, FIG. 5 is a perspective view illustrating an embodiment of a flow prevention unit of a transfer box among components of a secondary battery manufacturing system according to the disclosure of this patent document, FIGS. 6 and 7 are working diagrams illustrating the driving state of FIG. 5, FIG. 8 is a perspective view illustrating another embodiment of a flow prevention unit of a transfer box among components of a secondary battery manufacturing system according to the disclosure of this patent document, and FIGS. 9 and 10 are working diagrams illustrating the driving state of FIG. 8.

As illustrated in FIGS. 2 to 7, a secondary battery manufacturing system 800 having a multipackaging unit of the disclosure of this patent document may include an electrode supply unit 100 having a plurality of stacking devices 120 supplying an electrode assembly E in which a plurality of battery cells are stacked; a tab welding unit 200 disposed adjacent to the electrode supply unit 100, welding an electrode tab exposed from the electrode assembly E into a bundle thereof, and connecting electrode leads to seat the electrode assembly E on a transfer box 300; at least one packaging unit 400 disposed to be spaced apart from the tab welding unit 200, receiving the transfer box 300 from the tab welding unit 200, and inserting the electrode assembly E into an aluminum pouch; at least one temporary buffer 500 disposed on one side of the tab welding unit 200 and temporarily loading the transfer box 300 in stopping driving of the packaging unit 400; and a transfer unit 600 disposed between the tab welding unit 200 and the packaging unit 400, and selectively transferring the transfer box 300 of the tab welding unit 200 or the transfer box 300 of the temporary buffer 500 to a plurality of the packaging unit 400 according to control of a controller.

Prior to the description, a feature of the disclosure of this patent document may be that packaging units 400 are arranged in a multi-line method with respect to the tab welding unit 200, and the transfer box 300 may be temporarily stored in the temporary buffer 500 is provided such that even when the tab welding unit 200 or the packaging unit 400 stops, temporary storage of the transfer box 300 and supply to the packaging unit 400 are continuously performed to increase manufacturing productivity of a secondary battery.

In addition, each structure to be described later may be driven under control of the controller not illustrated.

As illustrated in FIG. 2, the secondary battery manufacturing system 800 of the disclosure of this patent document may include a plurality of secondary battery manufacturing facilities 700, and the secondary battery may be manufactured through each secondary battery manufacturing facility 700 line.

In this case, as illustrated, the plurality of secondary battery manufacturing facilities 700 may be disposed in a parallel direction toward a bottom portion on the drawings, which is such that the transfer unit 600 to be described later picks up and loads the transfer box 300 on the temporary buffer 500 or selective supplies the transfer box 300 to a plurality of packaging units 400.

In the secondary battery manufacturing facility 700 of the disclosure of this patent document, the electrode supply unit 100 and the tab welding unit 200 may be arranged in an in-line method, and the tab welding unit 200 and the packaging unit 400 may be arranged in a multi-line method.

The secondary battery manufacturing facility 700 of the disclosure of this patent document may include the electrode supply unit 100, the tab welding unit 200, the packaging unit 400, the temporary buffer 500, and the transfer unit 600.

The electrode supply unit 100 may supply the electrode assembly E to a tab welding unit 200 to be described later, and may be composed of a plurality of stacking devices 120.

As illustrated in FIG. 2, the plurality of stacking devices 120 may be arranged facing each other toward the tab welding unit 200, and in each of the stacking devices 120, and the electrode assembly E in which the plurality of battery cells are stacked (30 to 50 sheets) may be discharged.

In this case, the battery cells stacked to manufacture the electrode assembly E may be supplied to the stacking device 120 through a magazine not illustrated.

The plurality of electrode assemblies E discharged through the stacking devices 120 may be discharged to a supply line 110 toward the tab welding unit 200, and may be directed to the tab welding unit 200.

Therefore, the electrode supply unit 100 may discharge the electrode assemblies E through the stacking devices 120, and may continuously supply the discharged electrode assemblies E to the tab welding unit 200.

As illustrated in FIG. 2, the tab welding unit 200 may be disposed adjacent to the supply line 110 of the electrode assembly E of the electrode supply unit 100, and may be connected to the electrode supply unit 100 in an in-line method.

In the tab welding unit 200, the electrode tabs exposed from a positive electrode and a negative electrode of the electrode assembly E supplied from the electrode supply unit 100 may be welded into a bundle thereof, to unite the negative electrode and the positive electrode, respectively, and the electrode leads exposed externally may be connected to the electrode tabs of each of the negative and positive electrodes.

In this case, the transfer box 300 for transferring the welded electrode assembly E to the packaging unit 400 may be prepared on one side of the tab welding unit 200, and the electrode assembly E discharged from the tab welding unit 200 may be sequentially seated into the prepared transfer box 300 through a robot arm not illustrated.

The transfer box 300 will be described later.

The packaging unit 400 may receive the transfer box 300 in which the electrode assembly E is seated from the tab welding unit 200, to package the electrode assembly E in the aluminum pouch, and, as illustrated in FIG. 2, may be spaced apart from the tab welding unit 200 by a predetermined distance, to be arranged in two with respect to a single tab welding unit 200.

For example, the packaging unit 400 may be arranged in multiples with respect to the tab welding unit 200, the electrode assembly E may be sequentially drawn from the transfer box 300 supplied by each packaging unit 400 and inserted into the aluminum pouch, the electrolyte may be filled into the pouch to complete the packaging, and the pouch may be transferred to a separate post-process.

In the present embodiment, it is illustrated that the packaging unit 400 may be disposed in two relative to the tab welding unit 200, but it is of course possible to arrange at least one or at least two depending on arrangement.

In this case, two packaging units 400 may be arranged in a state of being spaced apart from the tab welding unit 200, for example, the transfer box 300 continuously discharged from the tab welding unit 200 in stopping driving of one packaging unit 400 for a predetermined time to replace a pouch, an electrolyte, and various tool equipment, among the two packaging units 400, may be supplied to another packaging unit 400, to fundamentally block an operation of the secondary battery manufacturing facility 700 from being stopped.

In addition, since pouches may be simultaneously packaged in the two packaging units 400, manufacturing productivity of the secondary battery may be remarkably improved.

As illustrated in FIG. 2, the temporary buffer 500 may be disposed on the bottom portion of the drawings, which may be one side of the tab welding unit 200, and a plurality of transfer boxes 300 in which the electrode assembly E is seated may be a place to be loaded such that the transfer box 300 may be temporarily stored.

For example, in the temporary buffer 500, loading of the transfer box 300 not supplied to the stopped tab welding unit 200 may be temporarily performed, when driving of any one packaging unit 400 stops for a predetermined time while continuously driving the tab welding unit 200.

In this case, the temporary buffer 500 may be formed to have multiple stages or may be provided in plural such that loading of the transfer box 300 may be continuously performed in response to a case in which two or more packaging units 400 are disposed, to extend indefinitely a temporary waiting time of the transfer box 300.

The transfer unit 600 (e.g., an automated guided vehicle) may selectively transfer the transfer box 300 discharged from the tab welding unit 200 or the transfer box 300 loaded in the temporary buffer 500 to each of the packaging units 400, under control of a controller not illustrated, according to a driving situation, and may be movably disposed between the tab welding unit 200 and the packaging unit 400 of the secondary battery manufacturing facilities 700 arranged in parallel as illustrated in FIG. 2.

For example, the transfer unit 600 may pick up the transfer box 300 loaded in the temporary buffer 500 when driving of the tab welding unit 200 stops, to supply the transfer box 300 to the packaging unit 400, and may pick up the transfer box 300 discharged from the tab welding unit 200 when any one packaging unit 400 stops to temporarily load the transfer box 300 into the temporary buffer 500 or supply the transfer box 300 to an unstopped packaging unit 400, to enable manufacture of secondary batteries to be continuously performed.

In this case, the transfer unit 600 may be an automatic guided vehicle (AGV) or an autonomous mobile robot (AMR).

In this case, the AGV and AMR may be robots that move unmanned, the AGV may have a process of slowing down or temporarily stopping when movement of a worker is detected during the movement while picking up the transfer box 300, and the AMR may have a process of quickly adjusting and avoiding a path when an obstacle or a worker is detected during movement while picking up the transfer box 300.

As described above, the transfer unit 600 selected as AGV or AMR may be disposed in plural between the tab welding unit 200 and the packaging unit 400, as illustrated in FIG. 2, and the temporary buffers 500 and the packaging unit 400 may be interconnected through wireless control.

In detail, the transfer unit 600 may transfer the transfer box 300 to a selected place under control of the controller while exchanging a wireless signal with the tab welding unit 200, the temporary buffer 500, and the packaging unit 400.

To this end, although not illustrated, various cameras, lasers and other detection sensors for sensing supply and discharge of the transfer box 300 or for counting the number of transfer boxes 300 and electrode assemblies E the transfer boxes 300 may be disposed in the tab welding unit 200, the temporary buffer 500, and the packaging unit 400, and these devices may be wirelessly connected to the controller.

In addition, as illustrated in FIG. 2, a virtual movement path 610 previously input to the controller may be formed between the tab welding unit 200 and the packaging unit 400, such that the transfer unit 600 circulates between the tab welding unit 200 and the packaging unit 400 in a parallel arrangement direction of the secondary battery manufacturing facility 700.

In this case, the movement path 610 may include a main path 611 in which the transfer unit 600 mainly circulates and moves, and a supply/discharge path 612 for picking up the transfer box 300 from the tab welding unit 200 and the temporary buffer 500 to both sides of the main path 611 or supplying the transfer box 300 to the packaging unit 400.

In addition, the movement path 610 may be configured such that the transfer unit 600 covers three secondary battery manufacturing facilities 700, as illustrated in FIG. 3, and may be configured such that the transfer unit 600 covers a plurality of secondary battery manufacturing facilities 700, as illustrated in FIG. 4.

Therefore, the transfer unit 600 may convert the transfer box 300 in a direction toward the supply/discharge path 612 while circulating and moving along the main path 611 in a state in which the transfer box 300 is loaded in the tab welding unit 200 or the temporary buffer 500, and may supply the transfer box 300 to the selected packaging unit 400 in which the electrode assembly E is supplied. In addition, in this process, recovery of an empty transfer box 300 may also be performed.

In addition, when the transfer unit 600 receives a supply signal from the packaging unit 400 that has already passed in a process of moving along the main path 611, the transfer unit 600 may make a U-turn along a U-turn arrow, as illustrated in FIG. 2, and may move to a received packaging unit 400 to supply the transfer box 300.

The transfer box 300 for transferring the electrode assembly E may form a base B maintaining an approximate square shape of which side surfaces and a top surface are open, as illustrated in FIGS. 5 to 10, and a plurality of seating plates 320 having a plate shape and a predetermined area on which the electrode assembly E is seated may be spaced apart from each other in a vertical direction.

In this case, the number of seating plates 320 is not limited because the seating plates 320 may be provided in various numbers according to productivity and surrounding environment of the secondary battery.

A flow prevention unit (330 or 340) for pressurizing the electrode assemblies E seated on the plurality of seating plates 320 to prevent flow of the electrode assembly E during movement of the transfer box 300 may be provided in the transfer box 300.

As illustrated in FIGS. 5 to 7, a flow prevention unit 330 according to an embodiment of the disclosure of this patent document may include a pair of fixing tables 331, a pair of lifting links 332, and a pair of moving blocks 334.

The fixing tables 331 may be fixed to the base B in a pair maintaining a predetermined length, may be disposed on both sides of the seating plates 320, and may movably support the seating plates 320 in a longitudinal direction.

In this case, each of the seating plates 320 may be connected to and supported by the fixing table 331 through an L/M guide such that the seating plates 320 may move up and down along the fixing table 331.

A lifting link 332 may be formed as a pair, and may be disposed adjacently to an external side of the fixing table 331.

A central portion of the lifting link 332 having an 'X' shape in a longitudinal direction may be coupled to a pivot pin P, and may be connected to both end portions of the seating plate 320 through a plurality of pivoting bars 333 having a predetermined length overlapped to pivot.

In this case, as illustrated in FIGS. 6 and 7, a left end portion (in an upward direction) of each of the pivoting bars 333 on the drawings may be pivotably installed on a left end portion of each of the seating plates 320 disposed in a vertical direction through a pivot pin P, and a right end portion (in a downward direction) of each of the pivoting bars 333 on the drawings may be pivotably installed on a right end portion of each of the seating plates 320 disposed in a vertical direction through a pivot pin P.

Therefore, the lifting link 332 may pivotably support the seating plate 320 on which the plurality of pivoting bars 333 in the 'X' shape are arranged vertically upward and downward in a diagonal direction, to move up and down the plurality of seating plates 320 through pivoting of the lifting link 332.

In this case, the guide rail L/M may be arranged between the left end portion of each of the pivoting bars 333 and the seating plate 320 such that the seating plate 320 may lift along a lifting table, when the pivoting bar 333 of the lifting link 332 pivots according to horizontal movement of the moving block 334 described later.

For example, the left end portion of the pivoting bar 333 on the drawings may be pivotably installed on the guide rail L/M, wherein the guide rail L/M may be a normal L/M guide.

In the present embodiment, although it is illustrated that the guide rail L/M is installed in the left end portion of the pivoting bar 333 on the drawings, the guide rails L/M may be installed in both end portions of the pivoting bar 333, respectively. Therefore, a structure thereof is not limited thereto.

A moving block 334 may be arranged on a bottom surface of the base B through the guide rail L/M to be movable in a horizontal direction, in a state connected to the left end portion of the pivoting bar 333, on the drawings, disposed in a vertical direction through a pivoting pin P.

In this case, a rotary shaft 335 having a helical shape may be installed through the moving block 334 to move horizontally, and the rotary shaft 335 may rotate horizontally in forward and backward directions on the bottom surface of the base B by forward and reverse rotation.

For example, the moving block 334 may rotate the pivoting bar 333 connected in moving horizontally by rotation of the rotary shaft 335, may raise the seating plate 320 by moving horizontally along the guide rail L/M between the seating plates 320 and the pivoting bar 333 in a process of rotating the pivoting bar 333, to form a separated space between the seating plates 320, and may enter the electrode assembly E into the space to seat the same on the seating plate 320.

FIGS. 8 to 10 illustrate another embodiment of a flow prevention unit 340.

A flow prevention unit 340 according to another embodiment of the disclosure of this patent document may include a pressure plate 341, a lifting support 342, an elastic member 343, and a pushing rod 346.

Inside a base B, a seating plate 320 having a plate shape and a predetermined area on which an electrode assembly E is seated may be disposed in plural in a vertical direction, and the pressure plate 341 having a plate shape and a predetermined area that moves up and down to face the seating plate 320 may be disposed on each of the seating plates on the drawings.

For example, the pressure plate 341 and the seating plate 320 may be sequentially arranged.

The lifting support 342 may be fixed as a plurality of lifting supports 342 to the base B while maintaining a predetermined length, and may be disposed on both sides of the pressure plate 341 to support pressure plates 341 in a lifting manner.

In this case, the pressure plates 341 may be connected to and supported by the lifting support 342 through a guide rail L/M such that the pressure plates 341 may move up and down along the lifting support 342.

The elastic member 343 may form the pressure plate 341 and the seating plate 320 in a pair such that the elastic member 343 may serve to connect the pressure plate 341 and the seating plate 320, to be elastically supported to each other.

In this case, the elastic member 343 may be disposed on both sides of the pressure plate 341 and the seating plate 320, facing the plurality of lifting supports 342, respectively, and a hook 345 may be formed to allow the elastic member 343 to be fixed to an end portion of the pressure plate 341 and an end portion of the seating plate 320, respectively.

In this case, the elastic member 343 may tension and maintain elasticity when the pressure plate 341 moves up on the drawings by moving up the pushing rod 346 to be described later, and the elastic member 343 may be a tension spring that returns by a restoring force when the pushing rod 346 moves down.

Although the elastic member 343 is illustrated as being a tension spring in the present embodiment, but is not limited thereto, and may be implemented through various elastic means.

The pushing rod 346 may be disposed on both sides of the pressure plate 341 and move up and down while maintaining a predetermined length, and may be connected to each of the pressure plates 341 through a fixing bolt, a connection key, welding, or the like.

For example, as illustrated in FIG. 9, the pushing rod 346 may simultaneously raise the plurality of pressure plates 341 connected thereto, to form a separated space between the seating plates 320 in a pair.

Specifically, the pressure plate 341 and the seating plate 320 may be spaced apart such that the electrode assembly E may enter and be seated on the seating plate 320.

After a transfer box 300 is supplied to a packaging unit 400, the pushing rod 346 may be pressurized upward on the drawings by driving a pushing cylinder.

In the present embodiment, although the electrode assembly is illustrated as being supported in the transfer box by a flow prevention unit, a structure of the flow prevention unit is not limited as it is supported through various structures.

Hereinafter, a process of manufacturing a secondary battery using a secondary battery manufacturing system according to the disclosure of this patent document will be described with reference to the accompanying drawings.

Prior to the description, the transfer box for transferring the electrode assembly will be described as a transfer box presented as an embodiment.

First, a worker supplies a magazine loaded with battery cells to each stacking device 120 of an electrode supply unit 100.

In each of the stacking devices 120, an electrode assembly E may be completed by sequentially stacking a set number of supplied battery cells and separators, and may be discharged to a supply line 110.

The electrode assemblies E discharged from each of the stacking devices 120 may be supplied to a tab welding unit 200 through the supply line 110.

In the tab welding unit 200, electrode tabs exposed from positive and negative electrodes of the electrode assembly E supplied from the stacking device 120 of the electrode supply unit 100 may be welded into a bundle, and electrode leads may be connected to each of the electrode tabs.

Thereafter, electrode assemblies E in which the welding is completed may be sequentially seated in a transfer box 300 disposed at an adjacent position for transfer.

In this case, seating plates 320 of the transfer box 300 may be spaced apart from each other at predetermined intervals, as illustrated in FIG. 6.

For example, as a rotary shaft 335 rotates by rotation of a coupled drive shaft 337, as illustrated in FIG. 6, to horizontally move a moving block 334 to the right on the drawings, a plurality of pivoting bars 333 may interlock and unfold to push the seating plates 320 in an upward direction, on the drawings, to space the seating plates 320 apart.

When the separation of the seating plates 320 is completed, a welded electrode assembly E may be picked up through a robot arm not illustrated, and may enter between the seating plates 320, as illustrated in FIG. 6, to be seated on the seating plate 320.

Thereafter, when the electrode assembly E is completely seated in the transfer box 300, as illustrated in FIG. 7, the drive shaft 337 may reversely rotate the rotary shaft 335 by applying reverse rotation.

In this case, the moving block 334 may move to the left on the drawings, may return the unfolded pivoting bars 333 to their original positions, and may pulls seating plates 320 downward on the drawings, such that the seating plates 320 are in close contact with each other.

In this process, an electrode assembly E seated on the seating plate 320 may be disposed on a top side, and may receive a predetermined pressure by the seating plate 320 that descends, to prevent movement on the seating plate 320.

When the seating of the electrode assembly E is completed, a transfer unit 600 moving along a main path 611 of a movement path 610 may convert the path into a supply/discharge path 612 according to control of the controller, and may enter a tab welding unit 200 in which the transfer box 300 is disposed.

The transfer unit 600 may pick up the transfer box 300 from the tab welding unit 200, may move along the main path 611, and may move the electrode assembly E to a selected packaging unit 400, which requires supply thereof, according to the control of the controller.

The transfer unit 600 reaching the selected packaging unit 400 may supply the transfer box 300, may enter the main path 611 again, and may move to face a tab welding unit 200 selected under control.

Packaging units 400 receiving the transfer box 300 may sequentially draw the electrode assembly E from the transfer box 300, may be inserted into a prepared aluminum pouch, and an electrolyte solution may be injected and filled into the pouch to complete packaging.

Thereafter, the pouch containing the electrode assembly E may be transferred for a separate post-process.

When any one packaging unit 400 of a single secondary battery manufacturing facility 700 stops driving for a predetermined time, the transfer unit 600 may pick up and supply the transfer box 300 discharged from the tab welding unit 200 to another packaging unit 400 under control of a controller.

When the supply of the transfer box 300 to the driving packaging unit 400 is saturated, the transfer unit 600 may temporarily load the transfer box 300 into a temporary buffer 500.

In addition, when driving of two packaging units 400 stops, the transfer unit 600 may load the transfer box 300 into the temporary buffer 500 or supply the transfer box 300 to a packaging unit 400 or a temporary buffer 500 of another secondary battery manufacturing facility 700 adjacent thereto.

When an operation of a tab welding unit 200 of a single secondary battery manufacturing facility 700 stops for a predetermined time, as discharge of the transfer box 300 to the tab welding unit 200 stops, the transfer unit 600 may pick up the transfer box 300 loaded in the temporary buffer 500 under control of the controller to supply the same to each of the packaging units 400.

In addition, the supply of the transfer box 300 through the temporary buffer 500 may be a packaging unit 400 on a single line, or a packaging unit 400 of another secondary battery manufacturing facility 700 that requires the supply of the transfer box 300.

For example, even when a situation in which an operation of the tab welding unit 200 or the packaging unit 400 stops occurs in any secondary battery manufacturing facility 700, the transfer box 300 may be continuously supplied to improve productivity of secondary batteries.

As described, a secondary battery manufacturing system having a multipackaging unit of the disclosure of this patent document may have effects that packaging units, among configurations of a secondary battery manufacturing facility, are arranged in a multi-line method rather than an in-line method, a temporary buffer in which a transfer box on which an electrode assembly is seated is temporarily loaded is provided, and, as the transfer box discharged from a tab welding unit or the transfer box loaded in the temporary buffer is transferred to each of the packaging units by a transfer unit, when the tab welding unit stops, the transfer unit picks up and supplies the transfer box of the temporary buffer to each of the packaging units, and when the packaging unit stops, the transfer unit picks up and loads the transfer box discharged from the tab welding unit into the temporary buffer, such that supply or discharge of the electrode assembly is continuously performed.

In addition, there may be technical effects that, since a transfer unit moves to an adjacent packaging unit or a remote packaging unit through a movement path, even when any packaging unit stops, supply of a transfer box to the other packaging unit is continuously performed without interruption, such that manufacturing productivity of a secondary battery remarkably increases.

In addition, there may be an effect that, since a flow prevention unit prevents flow of an electrode assembly seated in a transfer box, safety of the electrode assembly from external shock or vibration during transfer is secured.

In the above, a secondary battery manufacturing system having a multipackaging unit of the disclosure of this patent document has been described with preferred embodiments and accompanying drawings, but may be only intended to facilitate understanding of the disclosure of this patent document, and may not be intended to limit the technical scope of the disclosure of this patent document thereto.

According to a secondary battery manufacturing system having a multipackaging unit of the present disclosure having configurations as described above, there may be effects that packaging units, among configurations of a secondary battery manufacturing facility, are arranged in a multi-line method rather than an in-line method, a temporary buffer in which a transfer box on which an electrode assembly is seated is temporarily loaded is provided, and, as the transfer box discharged from a tab welding unit or the transfer box loaded in the temporary buffer is transferred to each of the packaging units by a transfer unit, when the tab welding unit stops, the transfer unit picks up and supplies the transfer box of the temporary buffer to each of the packaging units, and when the packaging unit stops, the transfer unit picks up and loads the transfer box discharged from the tab welding unit into the temporary buffer, such that supply or discharge of the electrode assembly is continuously performed.

In addition, there may be technical effects that, since a transfer unit moves to an adjacent packaging unit or a remote packaging unit through a movement path, even when any packaging unit stops, supply of a transfer box to the other packaging unit is continuously performed without interruption, such that manufacturing productivity of a secondary battery remarkably increases.

In addition, there may be an effect that, since a flow prevention unit prevents flow of an electrode assembly seated in a transfer box, safety of the electrode assembly from external shock or vibration during transfer is secured.

Variations, improvements and enhancements of the disclosed embodiments and other embodiments may be made based on the present disclosure.

## Claims

1. A secondary battery manufacturing system having a plurality of secondary battery manufacturing facilities and having a multipackaging unit, comprising:
an electrode supply unit having a plurality of stacking devices supplying an electrode assembly in which a plurality of battery cells are stacked;
a tab welding unit disposed adjacent to the electrode supply unit, welding an electrode tab exposed from the electrode assembly into a bundle thereof, and connecting electrode leads to seat the electrode assembly on a transfer box;
at least one packaging unit disposed to be spaced apart from the tab welding unit, receiving the transfer box from the tab welding unit, and inserting the electrode assembly into an aluminum pouch;
at least one temporary buffer disposed on one side of the tab welding unit and temporarily loading the transfer box in stopping driving of the packaging unit; and
a transfer unit disposed between the tab welding unit and the packaging unit, and selectively transferring the transfer box of the tab welding unit or the transfer box of the temporary buffer to a plurality of the packaging unit according to control of a controller.

2. The secondary battery manufacturing system of claim 1, wherein the transfer unit picks up the transfer box loaded in the temporary buffer in stopping driving of the tab welding unit, to supply the transfer box to the packaging unit, and
picks up the transfer box discharged from the tab welding unit in stopping driving of the packaging unit, to load the transfer box into the temporary buffer or supply the transfer box to an unstopped packaging unit.

3. The secondary battery manufacturing system of claim 1 or 2, wherein the transfer unit is an automatic guided vehicle (AGV) or an autonomous mobile robot (AMR).

4. The secondary battery manufacturing system of anyone of the preceding claims, wherein the plurality of secondary battery manufacturing facilities are arranged in a parallel direction.

5. The secondary battery manufacturing system of anyone of the preceding claims, wherein the transfer unit is arranged in plural to be interconnected with tab welding units, temporary buffers, and packaging units by wireless control, and transfers the transfer box of the tab welding unit or the transfer box of the temporary buffer to a selected packaging unit, while circularly moving along a virtual movement path between the tab welding unit and the packaging unit in an arrangement direction of the secondary battery manufacturing facilities, or recovers an empty transfer box.

6. The secondary battery manufacturing system of anyone of the preceding claims, wherein, in the transfer box, a plurality of seating plates on which the electrode assembly is seated are spaced apart in a vertical direction, and a flow prevention unit pressing electrode assemblies seated on the seating plates and preventing flowing of the electrode assemblies is provided.

7. The secondary battery manufacturing system of claim 6, wherein the flow prevention unit comprises:
fixing tables respectively disposed on both sides of the seating plates and supporting the seating plates in a moving manner;
a lifting link in which a plurality of pivoting bars rotatably overlapped in an 'X' shape are disposed adjacent to a pair of the fixing tables, and in which one side of each of the pivoting bars is installed on a one side end portion of each of the seating plates through a pivoting pin, and the other side of each of the pivoting bars is installed on the other side end portion of each of the seating plates through a pivoting pin; and
a moving block connected to an end portion of the pivoting bar disposed on a bottom side in a vertical direction through a pivoting pin, and rotating the pivoting bar to simultaneously lift the seating plates, while moving horizontally by rotation of a rotary shaft, to space the seating plates apart from each other.

8. The secondary battery manufacturing system of claim 7, wherein a guide rail is disposed such that the seating plate lifts between one side of the pivoting bar and an end portion of the seating plate when the pivoting bar is rotated according to movement of the moving block.

9. The secondary battery manufacturing system of claim 6, wherein the flow prevention unit comprises:
a plurality of pressure plates disposed above each of the seating plates on which the electrode assembly is seated, and moving toward the seating plate;
a lifting support disposed on both sides of the pressure plate and movably supporting the pressure plates;
an elastic member connected to be elastically supported with each other such that the pressure plate and the seating plate are provided to form a pair; and
a pushing rod having a predetermined length such that a pair of seating plates are spaced apart from each other by simultaneously moving the pressure plates in a state connected to each of the pressure plates.
